Europäisches Patentamt

(19) European Patent Office

Office européen des brevets

(11) Numéro de publication: **0 047 026**
**A2**

(12) **DEMANDE DE BREVET EUROPEEN**

(21) Numéro de dépôt: **81200655.9**

(22) Date de dépôt: **12.06.81**

(51) Int. Cl.³: **C 21 B 5/00**
**B 65 G 53/46**

(30) Priorité: **28.08.80 LU 82735**

(43) Date de publication de la demande:
**10.03.82 Bulletin 82/10**

(84) Etats contractants désignés:
**AT BE DE FR GB IT NL SE**

(71) Demandeur: **PAUL WURTH S.A.**
**32 rue d'Alsace**
**L-1122 Luxembourg(LU)**

(72) Inventeur: **Ulveling, Léon**
**rue Dr. Jos Peffer**
**Howald(LU)**

(72) Inventeur: **Mailliet, Pierre**
**1 allée Drosbach**
**Howald(LU)**

(74) Mandataire: **Meyers, Ernest et al,**
**c/o FREYLINGER & ASSOCIES Postfach 1153, 46 rue du**
**Cimetière**
**Luxemburg(LU)**

(54) **Procédé et dispositif de rinçage pneumatique d'un axe tournant exposé à des particules pulvérulentes.**

(57) L'invention s'applique plus particulièrement à un sas à rotor alvéolaire, dans lequel on évite les fuites de matière pulvérulente le long l'axe en injectant un gaz de rinçage sous pression dans le palier de l'axe.

Pour assurer une action efficace avec le minimum possible de contrepression du gaz, on règle le débit et la pression du gaz de rinçage de manière que son débit, ainsi que la différence entre la pression du gaz de rinçage et celle du gaz de propulsion soit constante et, au niveau de l'injection du gaz de rinçage, on divise progressivement le flux de ce gaz pour le distribuer uniformément autour de l'axe.

Fig. 1

EP 0 047 026 A2

Procédé et dispositif de rinçage pneumatique d'un axe
tournant exposé à des particules pulvérulentes

La présente invention concerne un procédé de rinçage pneumatique d'un axe tournant exposé à des particules
pulvérulentes, notamment de l'axe du rotor d'un sas à rotor
alvéolaire destiné à introduire des particules pulvérulentes dans un gaz de propulsion pneumatique, dans lequel on
évite les fuites de matières pulvérulentes le long de l'axe
en injectant un gaz de rinçage sous pression dans le palier
de l'axe. L'invention concerne également un dispositif
pour la mise en oeuvre de ce procédé.

Le brevet luxembourgeois No 82 601 décrit une
installation de transport pneumatique de particules pulvérulentes et plus particulièrement de la poudre de charbon
ou de la lignite en vue de l'injection dans un four à cuve.
La formation du courant pneumatique, c'est-à-dire l'introduction des particules pulvérulentes dans un courant d'air
sous pression pour la propulsion de ces particules pulvérulentes est effectuée au moyen d'un sas à rotor alvéolaire
connu en soi. Il s'agit, en l'occurence, d'un dispositif
constitué essentiellement d'un rotor cylindrique pourvu sur
sa périphérie d'un certain nombre de palettes définissant
un nombre correspondant d'alvéoles. Ce rotor tourne de
manière étanche à l'intérieur d'un boîtier et la matière
alimentée par le dessus est entraînée par les alvéoles vers
le bas dans un courant d'air sous pression servant de fluide de propulsion. Cet air de propulsion entraîne la matière
au fur et à mesure qu'elle est débitée par les alvéoles.

L'axe du rotor tourne dans deux paliers latéraux
du boîtier. Dans ce genre de dispositif se pose le problème
d'éviter les fuites des particules très fines de la matière
pulvérulente le long de l'axe du rotor. En effet, ces particules extrêmement fines ont tendance à voyager partout et
à être entraînées, par suite de la rotation, dans l'interstice circulaire subsistant entre l'axe du rotor et la surface
intérieure du palier. Cet interstice, si petit soit-il, ne
peut pas être éliminé pour éviter le frottement. En outre,
la différence de pression existant entre la pression atmosphérique à l'extérieur du sas et la pression du fluide de propulsion aggravent ce risque de fuite des particules à travers les paliers.

Pour remédier à cela et éviter le mélange de ces particules avec le lubrifiant et le grippage des roulements, on injecte en général un fluide dans les deux paliers à une pression telle que ce fluide, appelé fluide de rinçage, circule en sens inverse, c'est-à-dire de l'extérieur vers l'intérieur et entraîne les particules ayant tendance à s'échapper de l'intérieur.

Pour que ce rinçage des paliers soit efficace, il faut, bien entendu, que la pression de l'air de rinçage soit supérieure à la pression la plus forte susceptible d'exister à l'intérieur du rotor. Autrement dit, si cette pression de transport pneumatique est relativement forte et, en outre, variable, comme c'est le cas dans le brevet luxembourgeois 82 036, la pression de l'air de rinçage doit être élevée pour être certain qu'elle soit à tout moment supérieure à la pression à l'intérieur du rotor. Ceci revient à dire que si la pression à l'intérieur du sas diminue, la contrepression, c'est-à-dire la différence entre la pression dans le sas et la pression de l'air de rinçage augmente, et dans une installation telle que dans le brevet luxembourgeois 82 036, cette contrepression peut aller jusqu'à plusieurs bars, alors que quelques dizièmes de bars de contrepression suffisent pour injecter l'air de rinçage et assurer un fonctionnement efficace. En conclusion, le système utilisé jusqu'à présent n'est pas économique dans la mesure où il provoque un gaspillage d'autant plus grand que la pression à l'intérieur du sas est plus faible.

Un autre problème est celui de l'injection uniforme de l'air de rinçage autour de l'axe à travers les paliers. En effet, pour éviter les fuites, il faut que l'air de rinçage pénètre à l'intérieur du sas en enveloppant tout le pourtour de l'axe et ne choisisse pas un chemin préférentiel en laissant subsister certaines portions de la périphérie de l'axe non soumise à son action de rinçage.

Le but de la présente invention est de remédier à ces inconévients et de proposer un nouveau procédé permettant une action efficace avec le minimum possible de contrepression du gaz de rinçage et qui assure une distribution uniforme du gaz de rinçage autour de l'axe lors de la pénétration dans le sas. En vue d'atteindre cet objectif, le procédé selon l'invention est essentiellement caractérisé en ce que l'on règle le débit et la pression du gaz de rinçage de manière que son débit, ainsi que la différence entre la pression du gaz de rinçage et celle du gaz de propulsion soient constants et en ce que, au niveau de l'injection du gaz de rinçage, on divise progressivement le flux de ce gaz pour le distribuer uniformément autour de l'axe.

Selon une autre caractéristique de l'invention, on maintient ladite différence de pression à 0,2 bars.

Le dispositif pour la mise en oeuvre de ce procédé, notamment pour le rinçage de l'axe du rotor d'un sas à rotor alvéolaire destiné à introduire des particules pulvérulentes dans un gaz de propulsion pneumatique comprenant des conduites pour injecter un gaz de rinçage sous pression dans les paliers de l'axe du rotor est caractérisé par un instrument de rinçage automatique, comprenant un débitmètre avec un indication de débit et un régulateur de débit automatique asservi à la pression du gaz de propulsion de manière que la pression du gaz de rinçage dépasse la pression du gaz de propulsion d'une valeur prédéterminée et constante dans le temps et par un distributeur des gaz de rinçage comprenant essentiellement une série de plusieurs gorges périphériques autour de l'axe dans chacun des deux paliers, ces gorges étant reliées entre elles par des rainures parallèles à l'axe, dont le nombre augmente progressivement au fur et à mesure que leur profondeur diminue dans le sens de pénétration du gaz de rinçage.

La multiplication de ces rainures parallèles entre ces différentes gorges permet une distribution uniforme du gaz de rinçage autour de l'axe. Ainsi est-il possible, moyennant quatre séries de gorges, avec des rainures dont le nombre est doublé d'une paire de gorges à l'autre, de subdiviser un courant du gaz de rinçage en seize courants partiels périphériques autour de l'axe, ces seize courants périphériques formant ensuite une enveloppe uniforme du gaz de rinçage autour de l'axe avant la pénétration dans le sas. Cette distribution optimale du gaz de rinçage autour de l'axe permet d'injecter le gaz de rinçage avec une contrepression très faible, telle que 0,2 bars, comme indiqué ci-dessus.

D'autres particularités et caractéristiques ressortiront de la description détaillée d'un mode de réalisation avantageux présenté ci-dessous, à titre d'illustration, en référence aux dessins annexés dans lesquels :

La figure 1 montre schématiquement un sas à rotor alvéolaire avec un dispositif d'injection contrôlé d'un gaz de rinçage selon l'invention,

La figure 2 montre schématiquement, en coupe horizontale, la moitié d'une partie d'un palier de l'axe d'un rotor avec un distributeur de gaz de rinçage selon l'invention,

Les figures 3, 4, 5 et 6 montrent respectivement des coupes transversales au niveau des plans représentés par III, IV, V et VI sur la figure 2.

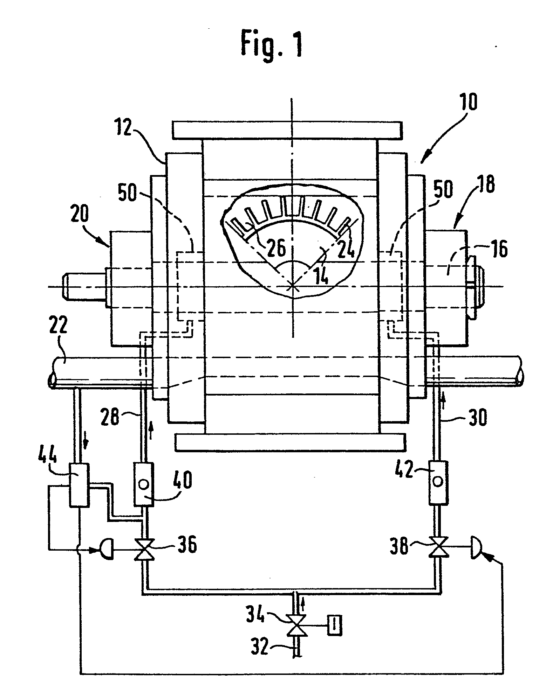

Sur la figure 1, on a représenté schématiquement un sas à rotor alvéolaire représenté globalement par la référence 10. Ce sas 10 comporte essentiellement un boîtier 12 dans lequel tourne un rotor 14 pour introduire progressivement de la matière pulvérulente dans une conduite de transport pneumatique. Le rotor 14 est porté par un axe 16 traversant des paliers 18 et 20 du boîtier 12. Pour mieux illustrer le rotor 14, on a montré une section de celui-ci, sous forme d'un cadran, tourné de 90$^\circ$ par rapport au plan de la figure. Cette représentation permet de distinguer les palettes périphériques 24 définissant les alvéoles 26 entraînant la matière pulvérulente.

Pour éviter des fuites de la poussière sur les deux côtés latéraux du rotor 14 et l'entraînement de ces poussières dans les paliers 18 et 20, on a prévu deux conduites 28 et 30 pour injecter un gaz de rinçage dans chacun des paliers 18 et 20 à une pression supérieure à la pression de propulsion dans la conduite pneumatique 22. Ce gaz de rinçage est généralement de l'air sous pression provenant d'une conduite commune 32 munie d'un clapet 34 autorégulateur de pression. Ce clapet 34 débite, en direction des deux branches partielles 28 et 30, de l'air sous pression uniforme, cette pression étant réglée de telle manière qu'elle soit supérieure de quelques dixièmes de bars à la pression la plus forte pouvant exister à l'intérieur du sas et dans la conduite pneumatique 22.

Pour éviter d'injecter plus d'air de rinçage qu'il n'en faut, on règle, selon la présente invention, la pression de l'air de rinçage pour l'adapter à la pression du courant pneumatique dans la conduite 22. Ce réglage peut être effectué, si on utilise un distributeur tel que décrit plus en détail en référence aux figures suivantes, de manière que la contrepression, c'est-à-dire la différence entre la pression de l'air de rinçage et la pression pneumatique dans la conduite 22, soit de l'ordre de 0,2 bars.

Ce réglage est effectué grâce à deux régulateurs automatiques de débit et de pression 36 et 38, incorporés dans chacune des conduites 28 et 30. A chacun de ces régulateurs est associé un débitmètre 40 et 42 avec indication du débit. L'opération des régulateurs 36 et 38 est commandée par un dispositif d'asservissement 44 recevant des indications quant à la pression dans la conduite 22 et de la pression de l'air de rinçage en aval des régulateurs 36 ou 38. L'opération du dispositif 44 est telle qu'il commande les régulateurs 36 et 38 de manière que la différence entre les pressions dans la conduite 22 et la pression de l'air de rinçage en aval des régulateurs 36 et 38 soit constamment égale à une valeur prédéterminée, par exemple à 0,2 bars. Par conséquent, si par suite des fluctuations de pression dans la conduite pneumatique 22, cette différence de pression, ou contrepression de l'air de rinçage, a tendance à augmenter, le dispositif 44 commande les régulateurs 36 et 38 en vue d'une réduction de la pression de l'air de rinçage, alors que si la contrepression de l'air de rinçage diminue, les régulateurs 36 et 38 sont ouverts davantage. De cette manière, il existe constamment une contrepression constante, par exemple, de 0,2 bars, quelque soit la pression du courant pneumatique dans la conduite 22.

Il est à noter que les organes 36, 38 et 40, 42 sont des organes connus en soi et sont généralement groupés ensemble dans un instrument unique comprenant également le dispositif 44 et disponible dans le commerce.

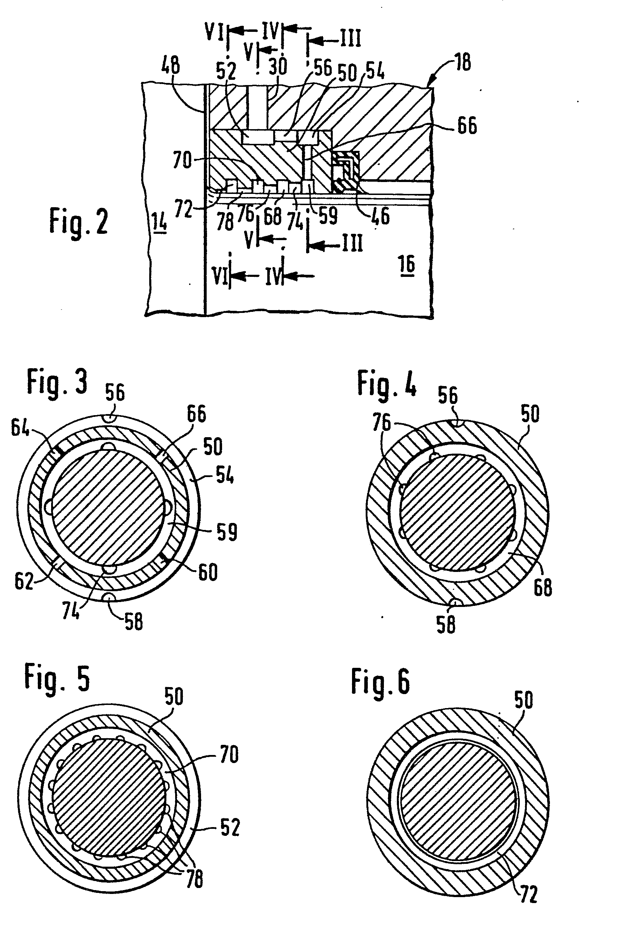

La figure 2 montre une partie du palier 18 traversée par l'axe 16 du rotor 14. Les roulements et les moyens de lubrification n'ont pas été représentés sur cette figure. Ces moyens se trouvent, en général, à la droite d'un joint d'étanchéité représenté par la référence 46.

Entre le rotor et le palier 18, il doit nécessairement exister un mince interstice représenté par 48, s'étendant entre le rotor 14 et le palier 18, ainsi qu'entre celui-ci et l'axe 16 jusqu'au joint 46. C'est pour éviter que les particules de poussière pénètrent à travers cet interstice 48 et n'abîment le joint 46 et, plus loin les roulements, que l'on injecte un gaz de rinçage pour repousser ces particules à l'intérieur du sas. Pour assurer une distribution uniforme et totale de l'air de rinçage autour de l'axe 16, la présente invention propose l'utilisation d'un distributeur représenté par la référence 50.

La conduite d'alimentation en air de rinçage 30 pénètre à travers le palier 18 et aboutit au niveau du distributeur 50. Celui-ci est constitué essentiellement d'une douille cylindrique pourvue de gorges circulaires et de rainures connectant ces gorges entre elles. Il est à noter que la représentation de la figure 2 est à une échelle plus grande que celle des figures 3 à 6, d'où la différence d'épaisseur du distributeur 50 entre la figure 2 et les figures suivantes.

La conduite 30 aboutit dans une gorge périphérique circulaire 52 aménagée dans la surface extérieure du distributeur 50. Une seconde gorge périphérique circulaire 54 est prévue à côté de la gorge 52 et communique avec celle-ci à travers deux rainures 56 et 58 disposées à des endroits diamétralement opposés. Une troisième gorge circulaire 59 est prévue sur la face intérieure de la douille 50 au niveau de la gorge 54. La gorge intérieure 59 communique avec la gorge extérieure 54 à travers quatre conduites radiales 60, 62, 64 et 66. D'autres gorges, 68, 70 et 72, identiques à la gorge 59, sont prévues sur la face intérieure du distributeur 50 en direction du rotor 14. La gorge circulaire intérieure 59 est reliée à la gorge circulaire intérieure avoisinante 68 à travers plusieurs, par exemple quatre, rainures 74 (voir figure 3). La gorge 68 est reliée, à son tour, à la gorge 70 par des rainures 76, dont le nombre est de préférence le double de celui des rainures 74, par exemple huit (voir figure 4). La gorge 70 est, à son tour, reliée à la gorge 72 par une série de rainures 78 dont le nombre a à nouveau doublé par rapport à celui des rainures 76 (voir figure 5).

Il est essentiel que la profondeur des rainures se succédant depuis la gorge 59 jusqu'à la gorge 72 diminue au fur et à mesure que leur nombre augmente. Il est également essentiel que les rainures disposées de part et d'autre d'une gorge, par exemple, les rainures 76 et 78 disposées de part et d'autre de la gorge 70, ne soient pas disposées les unes dans le prolongement des autres, pour éviter un passage direct de l'air de rinçage.

Etant donné que, comme le montre la figure 3, il est prévu quatre conduites radiales 60, 62, 64 et 66 pénétrant dans la gorge 59, il serait possible de prévoir, déjà au niveau de cette gorge, huit rainures 74 reliant cette gorge 59 à la gorge 68, ces huit rainures étant également décalées par rapport aux conduites 60 à 66. Ceci permettrait, soit de supprimer la dernière gorge 72, soit d'augmenter le nombre de rainures 78, par exemple, de monter à trente-deux.

L'air de rinçage pénétrant par la conduite 30 se répartit dans la gorge périphérique 52 et pénètre à travers les deux rainures 56 dans la gorge 54. A partir de cette gorge périphérique 54, l'air de rinçage pénètre par les quatre conduites radiales 60, 62, 64 et 66 dans la gorge intérieure 59. A partir de cette gorge intérieure 59, l'air pénètre successivement à travers les rainures 74, la gorge 68, les rainures 76, la gorge 70, les rainures 78 et la gorge 72 en suivant le chemin chicaneux imposé par la disposition décalée des différentes rainures 74, 76 et 78 et en se répartissant, à chaque fois, dans les gorges successives 59, 68, 70 et 72.

0047026

A partir de la gorge 72, la division du courant d'air de rinçage est suffisamment fine et sa distribution autour de l'axe 16 est suffisamment uniforme pour occuper complètement l'interstice 48 autour de l'axe 16 et assurer un rinçage efficace. Le distributeur 50 permet par conséquent de former une enveloppe de barrage complète autour de l'axe 16 qui ne laisse subsister aucune section qui ne soit pas soumise à l'action de l'air sous pression empêchant la pénétration des particules pulvérulentes.

REVENDICATIONS

1. - Procédé de rinçage pneumatique d'un axe tournant exposé à des particules pulvérulentes, notamment de l'axe du rotor d'un sas à rotor alvéolaire destiné à introduire des particules pulvérulentes dans un gaz de propulsion pneumatique, dans lequel on évite les fuites de matière pulvérulente le long de l'axe en injectant un gaz de rinçage sous pression dans le palier de l'axe, caractérisé en ce que l'on règle le débit et la pression du gaz de rinçage de manière que son débit, ainsi que la différence entre la pression du gaz de rinçage et celle du gaz de propulsion soit constante et en ce que, au niveau de l'injection du gaz de rinçage, on divise progressivement le flux de ce gaz pour le distribuer uniformément autour de l'axe.

2. - Procédé selon la revendication 1, caractérisé en ce que l'on maintient ladite différence de pression à 0,2 bars.

3. - Dispositif pour la mise en oeuvre du procédé selon les revendications 1 ou 2, notamment pour le rinçage de l'axe du rotor d'un sas à rotor alvéolaire destiné à introduire des particules pulvérulentes dans un gaz de propulsion pneumatique comprenant des conduites pour injecter un gaz de rinçage sous pression dans les paliers de l'axe du rotor, caractérisé en ce que chacune des conduites (28) (30) comporte un instrument de rinçage automatique, comprenant un débitmètre (40) (42), avec indication de débit et un régulateur de débit automatique (36) (38) asservi à la pression du gaz de propulsion de manière que la pression du gaz de rinçage dépasse la pression du gaz de propulsion d'une valeur prédéterminée et constante dans le temps et par un distributeur (50) des gaz de rinçage comprenant essentiellement une série de plusieurs gorges périphériques (59) (68) (70) (72) autour de l'axe (16) dans chacun des paliers (18) (20), ces gorges (59) (68) (70) (72) étant reliées entre elles par des rainures (74) (76) (78) parallèles à l'axe (16), dont le nombre augmente progressivement au fur et à mesure que leur profondeur diminue dans le sens de

0047026

pénétration du gaz de rinçage.

4. - Dispositif selon la revendication 3, caractérisé en ce que l'admission du gaz de rinçage dans la gorge la plus éloignée (59) du rotor est réalisée à travers une gorge périphérique circulaire (52) prévue autour du distributeur (50) au niveau des conduites d'admission (28)(30), cette gorge périphérique (52) communiquant à travers des rainures (56)(58) avec une autre gorge périphérique circulaire (54) qui communique à travers des conduites radiales (60)(62)(64) et (66) avec la gorge circulaire intérieure (59) la plus éloignée du rotor (14).

5. - Dispositif selon l'une quelconque des revendications 3 ou 4, caractérisé en ce que le nombre de rainures en aval d'une gorge circulaire intérieure (68)(70) est le double du nombre de rainures en amont de ces gorges circulaires (68)(70).

6. - Dispositif selon l'une quelconque des revendications 3 à 5, caractérisé en ce que les rainures disposées de part et d'autre d'une gorge circulaire intérieure (68)(70) ne sont pas disposées les unes dans le prolongement des autres.

## Fig. 1

Fig. 2

Fig. 3

Fig. 4

Fig. 5

Fig. 6